# EUROPEAN PATENT APPLICATION

(11) **EP 4 178 189 A1**
(43) Date of publication of application: **10.05.2023**
(21) Application number: 21843287.0
(22) Date of filing: 11.06.2021
(51) Int. Cl.: H04M 11/00, H04N 5/232, H04W 48/16, H04M 1/72

(54) **COMMUNICATION DEVICE, COMMUNICATION METHOD, PROGRAM**

(30) Priority: 13.07.2020 JP 2020120118
(71) Applicant: Sony Group Corporation, Minato-Ku, Tokyo, 108-0075 (JP)
(72) Inventor: JINNOUCHI, Ryo, Tokyo 108-0075 (JP)
(74) Representative: D Young & Co LLP
(86) International application number: PCT/JP2021/022388
(87) International publication number: WO 2022/014225

(57) **Abstract**

A communication apparatus includes a communication unit that performs data communication via an external communication network and a control unit. The control unit performs switching processing related to data communication by the communication unit on the basis of situation determination processing.

## Description

### TECHNICAL FIELD

The present technology relates to a communication apparatus, a communication method, and a program, and particularly relates to a communication scheme and a control technology of a communication destination.

### BACKGROUND ART

It is common to transmit an image (a still image or a moving image) captured by an imaging device to another device, for example, a computer device such as a cloud server.

Patent Document 1 below discloses a technique related to transmission of image data and metadata.

### CITATION LIST

### PATENT DOCUMENT

Patent Document 1: Japanese Patent Application Laid-Open No. 2007-150781

### SUMMARY OF THE INVENTION

### PROBLEMS TO BE SOLVED BY THE INVENTION

For example, for the purpose of reporting by television broadcasting, web distribution, and the like, there is a case where an image is delivered by uploading a captured still image or moving image to an external server device immediately after a camera operator captures an image at a site such as a sports venue or an event venue.

In particular, in recent years, many imaging devices and mobile terminals have various communication functions such as mobile communication and local communication, and images are transmitted from these devices on various occasions.

However, in a case where the imaging device and the like perform transmission, the same communication scheme is not always appropriate. In particular, an appropriate communication scheme may be different depending on a place, an application, a date and time, and the like, and it is difficult for the user to always make such a determination and switch the communication scheme and the like.

Therefore, the present disclosure proposes a technology for appropriately selecting a communication scheme, a communication destination, and the like in an imaging device, a terminal device, and the like having a communication function, that is, a device that can be referred to as a communication apparatus.

### SOLUTIONS TO PROBLEMS

A communication apparatus according to the present technology includes: a communication unit that performs data communication via an external communication network; and a control unit that performs switching processing related to data communication by the communication unit on the basis of situation determination processing.

In the situation determination processing, for example, a communication status, a device status, a use status, and the like are determined, and a communication scheme, a communication destination, and the like are switched on the basis of the determination.

In the above-described communication apparatus according to the present technology, it is conceivable that the control unit performs switching processing including switching between a first communication scheme and a second communication scheme as data communication via the external communication network on the basis of the situation determination processing.

For example, in a case of a configuration in which communication of a plurality of communication schemes including the first and second communication schemes can be selected, the communication scheme is selected on the basis of the situation.

In the above-described communication apparatus according to the present technology, it is conceivable that the first communication scheme includes a communication scheme of a fifth generation mobile communication system, and
the second communication scheme includes a communication scheme of a fourth generation mobile communication system.

That is, in a configuration where the 4G communication and the 5G communication can be used together, either communication is selected.

It is conceivable that the communication apparatus according to the present technology described above is configured as an imaging device, and the communication unit transmits image data to an external information processing device via the external communication network.

In the imaging device that captures a still image or a moving image, in a case where image data is transmitted to the external information processing device such as a cloud server device, for example, the communication scheme is selected on the basis of the situation.

In the above-described communication apparatus according to the present technology, it is conceivable that the communication unit can perform data communication with another terminal device by local communication, and the control unit performs switching processing of performing data communication via the external communication network or performing data communication with the another terminal device via local communication on the basis of the situation determination processing.

As the local communication, for example, short-range wireless communication, wired connection communication between devices, home network communication, local area network (LAN) communication, and the like are assumed.

In the above-described communication apparatus according to the present technology, it is conceivable that the another terminal device is a device capable of data communication via the external communication network.

The another terminal device is, for example, a portable terminal device carried by a user, and this terminal device can also transmit data to an external information processing device through the external communication network.

In the communication apparatus according to the present technology described above, it is conceivable that the communication unit is capable of master/slave communication with a compatible device by local communication, and the control unit performs switching processing of performing data communication via the external communication network or performing the master/slave communication on the basis of the situation determination processing.

For example, master/slave communication that can be used for parameter collective setting and the like can be executed between devices that can support master/slave such as a plurality of imaging devices.

In the communication apparatus according to the present technology described above, it is conceivable that the control unit determines a communication scheme supported by an external communication network of a connection destination as the situation determination processing.

For example, it is determined whether the external communication network of the connection destination is compatible with the 4G communication scheme or the 5G communication scheme.

In the above-described communication apparatus according to the present technology, it is conceivable that the control unit determines whether or not the external communication network is connectable as the situation determination processing.

For example, by determining whether connection to the external communication network is currently possible, appropriate communication is selected and the switching is performed.

In the above-described communication apparatus according to the present technology, it is conceivable that the control unit determines a communication speed of an external communication network of a connection destination as the situation determination processing.

For example, the switching is performed on the basis of a communication speed in a current external communication network.

In the above-described communication apparatus according to the present technology, it is conceivable that the control unit determines a transmission data amount as the situation determination processing.

For example, the switching is performed on the basis of an amount of data to be transmitted.

In the above-described communication apparatus according to the present technology, it is conceivable that the control unit determines a battery capacity as the situation determination processing.

For example, a remaining battery level of the communication apparatus itself is determined, and the switching is performed on the basis of the remaining battery level.

In the above-described communication apparatus according to the present technology, it is conceivable that the control unit determines an operating situation of an external information processing device serving as a transmission destination via an external communication network as the situation determination processing.

For example, the operating situation is determined by a response from the external information processing device, and the switching is performed.

In the above-described communication apparatus according to the present technology, it is conceivable that the control unit determines a use setting by a user as the situation determination processing.

For example, the switching is performed according to the setting of news reporting work/hobby imaging and the like, the setting of the presence or absence of processing such as image processing as the use of the user.

A communication method of the present technology is a communication method of a communication apparatus including a communication unit that performs data communication by an external communication network, the communication method including performing switching processing related to data communication by the communication unit on the basis of situation determination processing.

As a result, appropriate communication is performed according to a place, a date and time, a situation of the device, a use, and the like.

A program according to the present technology is a program that causes a control unit of a communication apparatus to execute the
switching processing described above. This facilitates implementation of the above-described communication apparatus.

### BRIEF DESCRIPTION OF DRAWINGS

Fig. 1 is an explanatory diagram of a system configuration according to an embodiment of the present technology.
Fig. 2 is a block diagram of an imaging device according to the embodiment.
Fig. 3 is a block diagram of an information processing device according to the embodiment.
Fig. 4 is a flowchart of processing for determining a situation of the imaging device and switching a connection destination according to the embodiment.
Fig. 5 is a flowchart of processing for determining a situation of the imaging device and switching a communication scheme according to the embodiment.
Fig. 6 is a flowchart of transmission processing of a mobile terminal according to the embodiment.
Fig. 7 is a flowchart of exemplary transmission processing of a main imaging device according to the embodiment to a sub imaging device.

### MODE FOR CARRYING OUT THE INVENTION

Hereinafter, embodiments will be described in the following order.
<1. System configuration>
<2. Configurations of imaging device, server device, and mobile terminal>
<3. Communication processing of imaging device>
<4. Communication processing of mobile terminal>
<5. Communication processing between main and sub imaging devices>
<6. Summary and modification examples>

Note that, in the embodiment, an imaging device 1 that transmits image data and the like is given as an example of a communication apparatus. Furthermore, a server device 2 is exemplified as an external information processing device to which the imaging device 1 transmits image data via an external communication network.

### <1. System configuration>

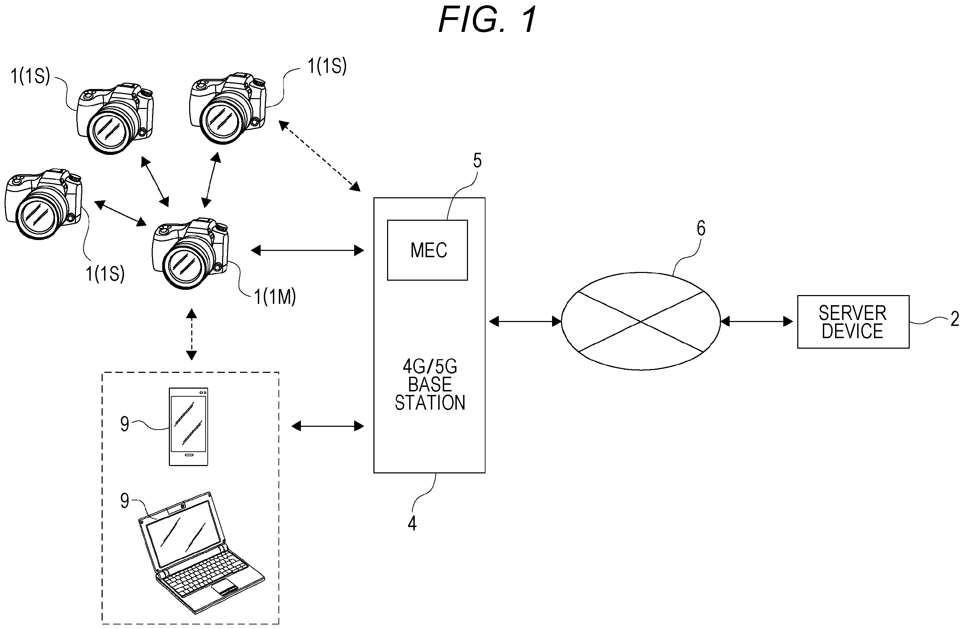

Fig. 1 illustrates a system configuration example of an embodiment. This system is a communication system in which one or a plurality of imaging devices 1 and the server device 2 can communicate with each other via a network 6, whereby an image captured by the imaging devices 1 can be uploaded to the server device 2.

Note that, in the present disclosure, the term "image" includes a still image and a moving image.

As the imaging device 1, various imaging devices as a video camera and a still camera are assumed. The illustrated imaging device 1 may be assumed as a camera that a professional photographer captures in a sports or event venue, or may be assumed as a camera that a general user uses for imaging in daily life, travel, and the like. The use case is not particularly limited.

A plurality of the imaging devices 1 may be used as the imaging device 1. In this case, one device is set as a master device, other devices are set as slave devices, and communication from the master device to the slave devices for sharing various setting information, parameters, and the like between the imaging devices 1, network communication from the slave devices via the master device, and the like can be performed.

In the drawing, an imaging device 1 (1M) as a master device and imaging devices 1 (1S) as slave devices are illustrated. In a case of distinguishing them in the description, they are referred to as "main imaging device 1M" and "sub imaging devices 1S".

Note that the sub imaging devices 1S can also communicate with the server device 2 via the network 6, for example, independently of the main imaging device 1M. The main imaging device 1M and the sub imaging devices 1S do not need to be devices having different functions, and may be realized, for example, in response to a setting operation in which a user simply selects one of the main imaging device 1M and the others are the sub imaging devices 1S.

Furthermore, although the plurality of imaging devices 1 is illustrated in Fig. 1, it is naturally assumed that only one imaging device 1 is used as a communication system for uploading an image and the like.

The server device 2 is an information processing device formed by a computer device, but is assumed to be a device that functions as a so-called cloud server. Of course, it is not limited to the aspect as a cloud server. The server device 2 stores the uploaded image and the like.

The network 6 indicates a network as an external communication network, and for example, networks as the Internet, a telephone line, a mobile communication network, a satellite communication network, and other various communication networks are assumed.

In the example of Fig. 1, the imaging device 1 communicates with the server device 2 via a base station 4. The base station 4 is, for example, a base station of 4G communication (fourth generation mobile communication system) and 5G communication (fifth generation mobile communication system).

A mobile edge computing (MEC) 5 may be deployed in the base station 4. Communication of each imaging device 1 may be performed via processing of the MEC 5. Furthermore, some functions of the server device 2 may be executed by the MEC 5.

The imaging device 1 can directly transmit information such as an image to the server device 2 by, for example, file transfer protocol (FTP) communication.

Alternatively, in a case where the camera operator has a mobile terminal 9 such as a smartphone, a personal computer, or a tablet, it is also possible to transfer information such as an image from the imaging device 1 to the mobile terminal 9 by wired connection or short-distance wireless communication, and transmit the information from the mobile terminal 9 to the server device 2.

Note that, in the present disclosure, it is assumed that short-distance wireless communication or wired connection communication between devices is performed as communication between the imaging device 1 and the mobile terminal 9 or communication between the main imaging device 1M and the sub imaging device 1S, and these communications are referred to as "local communication" and distinguished from communication by an external communication network via the network 6. As the local communication, for example, short-range wireless communication, wired connection communication, home network communication, local area network (LAN) communication, and the like are assumed.

Furthermore, for communication via the network 6 which is an external communication network, a term "external network" such as "communication by an external network" may be used in order to distinguish from these "local communications".

The image uploaded from the imaging device 1 to the server device 2 may be in a situation of being converted into a file in a format such as joint photographic experts group (JPEG), or may be binary information that is not converted into a file such as RGB data. In particular, the data format is not limited.

### <2. Configurations of imaging device, server device, and mobile terminal>

Hereinafter, configuration examples of the imaging device 1, the server device 2, and the mobile terminal 9 will be described.

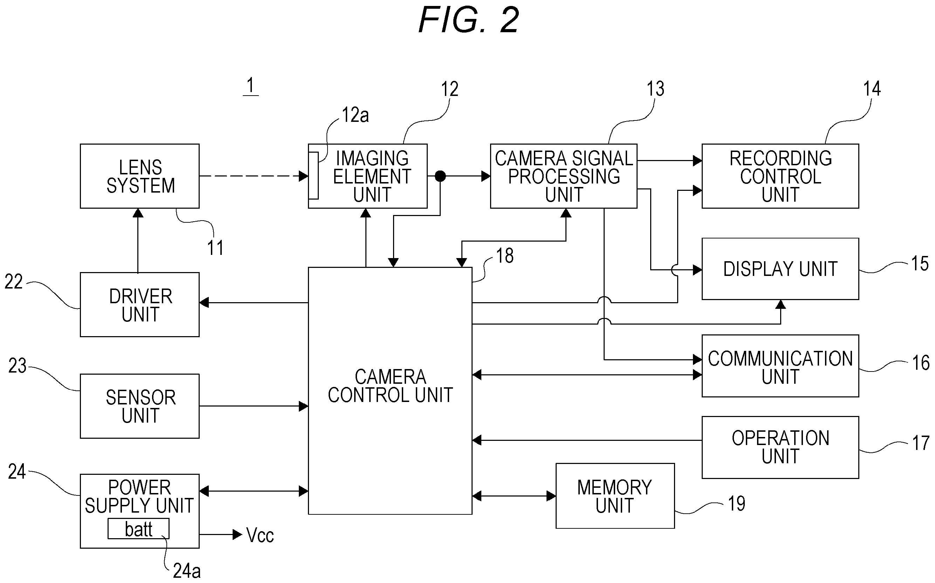

First, a configuration example of the imaging device 1 will be described with reference to Fig. 2.

The imaging device 1 includes, for example, a lens system 11, an imaging element unit 12, a camera signal processing unit 13, a recording control unit 14, a display unit 15, a communication unit 16, an operation unit 17, a camera control unit 18, a memory unit 19, a driver unit 22, a sensor unit 23, and a power supply unit 24.

The lens system 11 includes lenses such as a zoom lens and a focus lens, a diaphragm mechanism, and the like. Light (incident light) from a subject is guided by the lens system 11 and condensed on the imaging element unit 12.

The imaging element unit 12 includes, for example, an image sensor 12a (imaging element) of a complementary metal oxide semiconductor (CMOS) type, a charge coupled device (CCD) type, and the like.

The imaging element unit 12 performs, for example, correlated double sampling (CDS) processing, automatic gain control (AGC) processing, and the like, and further performs analog/digital (A/D) conversion processing on an electrical signal obtained by photoelectrically converting light received by the image sensor 12a. Then, an imaging signal as digital data is output to the camera signal processing unit 13 and the camera control unit 18 in a subsequent stage.

The camera signal processing unit 13 is configured as an image processing processor by, for example, a digital signal processor (DSP) and the like. The camera signal processing unit 13 performs various types of signal processing on the digital signal (captured image signal) from the imaging element unit 12. For example, as a camera process, the camera signal processing unit 13 performs preprocessing, synchronization processing, YC generation processing, resolution conversion processing, file formation processing, and the like.

In the preprocessing, clamp processing of clamping the black levels of R, G, and B to a predetermined level, correction processing between the color channels of R, G, and B, and the like are performed on the captured image signal from the imaging element unit 12.

In the synchronization processing, color separation processing is performed so that the image data for each pixel has all the R, G, and B color components. For example, in the case of an imaging element using a Bayer array color filter, demosaic processing is performed as the color separation processing.

In the YC generation processing, a luminance (Y) signal and a color (C) signal are generated (separated) from the R, G, and B image data.

In the resolution conversion processing, the resolution conversion processing is executed on the image data subjected to various types of signal processing.

In the file forming processing, for example, the image data subjected to the above-described various processing is subjected to, for example, compression encoding for recording or communication, formatting, generation or addition of metadata, and the like to generate a file for recording or communication.

For example, an image file in a format such as JPEG, tagged image file format (TIFF), or graphics interchange format (GIF) is generated as a still image file. Furthermore, it is also conceivable to generate an image file as an MP4 format and the like used for recording moving images and audio conforming to MPEG-4.

Note that it is also conceivable to generate an image file as raw (RAW) image data.

The camera signal processing unit 13 generates metadata including information of processing parameters in the camera signal processing unit 13, various control parameters acquired from the camera control unit 18, information indicating an operation situation of the lens system 11 or the imaging element unit 12, mode setting information, imaging environment information (date and time, place, and the like), identification information of the imaging device itself, information of a mounting lens, information of a previously registered camera operator (name and identification information), international press telecommunications council (IPTC) metadata, and the like.

Note that the IPTC metadata is metadata in a format designed by a media company association, and can describe various types of information such as "description/caption", "description writer", "headline", and "keyword".

The recording control unit 14 performs recording and reproduction on a recording medium by a nonvolatile memory, for example. The recording control unit 14 performs processing of recording an image such as moving image data or still image data or metadata on a recording medium, for example.

Various actual forms of the recording control unit 14 can be considered. For example, the recording control unit 14 may be configured as a flash memory built in the imaging device 1 and a write/read circuit thereof. Furthermore, the recording control unit 14 may be in the form of a card recording/reproducing unit that performs recording/reproducing access to a recording medium detachable from the imaging device 1, for example, a memory card (portable flash memory and the like). Furthermore, the recording control unit 14 may be realized as a hard disk drive (HDD) and the like as a form built in the imaging device 1.

The display unit 15 is a display unit that performs various displays for the imaging person, and is, for example, a display panel or a viewfinder by a display device such as a liquid crystal display (LCD) or an organic electro-luminescence (EL) display arranged in a housing of the imaging device 1.

The display unit 15 executes various displays on the display screen on the basis of an instruction from the camera control unit 18.

For example, the display unit 15 displays a reproduced image of the image data read from the recording medium in the recording control unit 14.

Furthermore, there is a case where image data of a captured image whose resolution has been converted for display by the camera signal processing unit 13 is supplied to the display unit 15, and the display unit 15 performs display on the basis of the image data of the captured image in response to an instruction from the camera control unit 18. As a result, a so-called through image (object monitoring image), which is a captured image during composition confirmation or moving image recording, is displayed.

Furthermore, the display unit 15 executes various operation menus, icons, messages, and the like, that is, display as a graphical user interface (GUI) on the screen on the basis of an instruction from the camera control unit 18.

The communication unit 16 comprehensively indicates various communication devices and communication processing circuits mounted on the imaging device 1.

As the communication by the communication unit 16, there are provided various communication circuits and communication devices capable of performing communication (external network communication) by the network 6 which is an external communication network, local communication with the mobile terminal 9, and further, as an aspect of the local communication, master/slave communication between the corresponding devices, that is, between the main imaging device 1M and the sub imaging device 1S.

As a result, the imaging device 1 transmits and receives captured image data (still image file or moving image file), metadata, various parameters, and the like to and from an external information processing device, imaging device, display device, recording device, reproduction device, and the like, for example.

More specifically, the communication unit 16 includes, as a network communication unit, some or all of a function of performing communication by a mobile communication network such as 4G or 5G, an Internet line, a home network, a local area network (LAN), and the like, a function of performing short-range wireless communication such as Bluetooth (registered trademark), Wi-Fi (registered trademark) communication, or near field communication (NFC), a function of performing infrared communication and the like, a function of performing wired connection communication with another device, and the like.

The operation unit 17 collectively indicates input devices for the user to perform various operation inputs. Specifically, the operation unit 17 indicates various operation elements (keys, dials, touch panels, touch pads, and the like) provided in the housing of the imaging device 1.

The operation of the user is detected by the operation unit 17, and a signal corresponding to the input operation is transmitted to the camera control unit 18.

The camera control unit 18 includes a microcomputer (arithmetic processing device) including a central processing unit (CPU).

The memory unit 19 stores information and the like used for processing by the camera control unit 18. As the illustrated memory unit 19, for example, a read only memory (ROM), a random access memory (RAM), a flash memory, and the like are comprehensively illustrated.

The memory unit 19 may be a memory area built in a microcomputer chip as the camera control unit 18 or may be configured by a separate memory chip.

The camera control unit 18 executes a program stored in the ROM, the flash memory, and the like of the memory unit 19 to control the entire imaging device 1.

For example, the camera control unit 18 controls operations of necessary units such as control of a shutter speed of the imaging element unit 12, an instruction of various signal processing in the camera signal processing unit 13, an imaging operation and a recording operation according to a user's operation, a reproduction operation of a recorded image file, an operation of the lens system 11 such as zooming, focusing, and diaphragm adjustment in a lens barrel, a user interface operation, and setting of a communication scheme and a transmission destination by the communication unit 16.

The RAM in the memory unit 19 is used for temporary storage of data, programs, and the like as a work area at the time of various data processing of the CPU of the camera control unit 18.

The ROM and the flash memory (nonvolatile memory) in the memory unit 19 are used for storing an operating system (OS) for the CPU to control each unit, content files such as image files, application programs for various operations, firmware, various types of setting information, and the like.

The various types of setting information include communication setting information, exposure setting as setting information regarding imaging operation, shutter speed setting, mode setting, white balance setting as setting information regarding image processing, color setting, setting regarding image effect, custom key setting and display setting as setting information regarding operability, and the like.

The driver unit 22 is provided with, for example, a motor driver for a zoom lens drive motor, a motor driver for a focus lens drive motor, a motor driver for a motor of a diaphragm mechanism, and the like.

These motor drivers apply a drive current to a corresponding driver according to an instruction from the camera control unit 18, and cause the driver to execute movement of the focus lens and the zoom lens, opening and closing of the diaphragm blade of the diaphragm mechanism, and the like.

The sensor unit 23 comprehensively indicates various sensors mounted on the imaging device.

For example, an inertial measurement unit (IMU) is mounted as the sensor unit 23. For example, an angular velocity (gyro) sensor of three axes of pitch, yaw, and roll can detect an angular velocity, and an acceleration sensor can detect an acceleration.

Furthermore, as the sensor unit 23, for example, a position information sensor, an illuminance sensor, and the like may be mounted.

Furthermore, it is assumed that a distance measuring sensor is provided as the sensor unit 23. A distance from the imaging device 1 to the subject can be measured by the distance measuring sensor at the time of imaging, and the distance information can be added as metadata to the captured image.

Various information detected by the sensor unit 23, for example, position information, distance information, illuminance information, IMU data, and the like are added as metadata to the captured image together with date and time information managed by the camera control unit 18.

The power supply unit 24 outputs a power supply voltage Vcc necessary for each unit using the battery 24a as a power supply. On/off of supply of the power supply voltage Vcc by the power supply unit 24, that is, on/off of the power supply of the imaging device 1 is controlled by the camera control unit 18. Furthermore, the camera control unit 18 can detect a capacity of the battery 24a, that is, a remaining battery capacity.

Note that the power supply unit 24 may be configured to be able to output the power supply voltage Vcc on the basis of an external power supply, for example, by connecting an AC adapter or receiving supply of a DC power supply voltage.

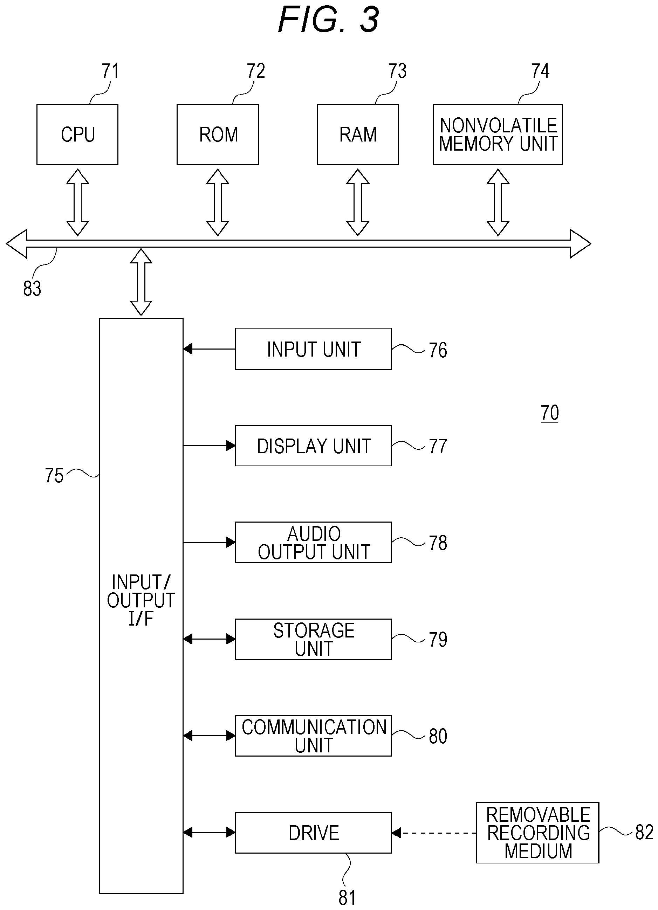

Next, a configuration example of an information processing device 70 applicable as the server device 2 or the mobile terminal 9 is illustrated in Fig. 3.

A CPU 71 of the information processing device 70 executes various types of processing in accordance with a program stored in a nonvolatile memory unit 74 such as a ROM 72 or an electrically erasable programmable read-only memory (EEP-ROM), or a program loaded from a storage unit 79 to a RAM 73. The RAM 73 also appropriately stores data and the like necessary for the CPU 71 to execute various processing.

The CPU 71, the ROM 72, the RAM 73, and the nonvolatile memory unit 74 are connected to one another via a bus 83. An input/output interface 75 is also connected to the bus 83.

An input unit 76 including an operator and an operation device is connected to an input/output interface 75.

For example, as the input unit 76, various operators and operation devices such as a keyboard, a mouse, a key, a dial, a touch panel, a touch pad, and a remote controller are assumed.

An operation of the user is detected by the input unit 76, and a signal corresponding to the input operation is interpreted by the CPU 71.

Furthermore, a display unit 77 including an LCD, an organic EL panel, and the like, and an audio output unit 78 including a speaker and the like are connected to the input/output interface 75 integrally or separately.

The display unit 77 is a display unit that performs various displays, and includes, for example, a display device provided in a housing of the information processing device 70, a separate display device connected to the information processing device 70, and the like.

The display unit 77 executes display of an image for various types of image processing, a moving image to be processed, and the like on a display screen on the basis of an instruction from the CPU 71. Furthermore, the display unit 77 displays various operation menus, icons, messages, and the like, that is, displays as a graphical user interface (GUI) on the basis of an instruction from the CPU 71.

In some cases, the storage unit 79 including a hard disk, a solid-situation memory, and the like, and a communication unit 80 including a modem and the like are connected to the input/output interface 75.

The communication unit 80 performs communication processing via a transmission path such as the Internet, wired/wireless communication with various devices, bus communication, and the like.

A drive 81 is also connected to the input/output interface 75 as necessary, and a removable recording medium 82 such as a magnetic disk, an optical disk, a magneto-optical disk, or a semiconductor memory is appropriately mounted.

By the drive 81, a data file such as an image file, various computer programs, and the like can be read from the removable recording medium 82. The read data file is stored in the storage unit 79, and images and sounds included in the data file are output by the display unit 77 and the audio output unit 78. Furthermore, the computer program and the like read from the removable recording medium 82 are installed in the storage unit 79 as necessary.

In the information processing device 70, for example, software for the processing of the present embodiment can be installed via network communication by the communication unit 80 or the removable recording medium 82. Alternatively, the software may be stored in advance in the ROM 72, the storage unit 79, and the like.

For example, in a case where the information processing device 70 is the server device 2, reception processing, storage processing, and the like corresponding to information transmission from the imaging device 1 or the mobile terminal 9 are performed on the basis of the control of the CPU 71.

Furthermore, in a case where the information processing device 70 is the mobile terminal 9, reception processing, storage processing, processing such as image processing according to information transmission from the imaging device 1, transmission processing to the server device 2, and the like are executed on the basis of the control of the CPU 71. Various communications are performed via the communication unit 80.

### <3. Communication processing of imaging device>

An example of communication processing of the imaging device 1 will be described. The processing of the imaging device 1 to be described below mainly indicates situation determination by the camera control unit 18 and switching processing regarding communication based on the situation determination. The camera control unit 18 controls communication by the communication unit 16 by the following processing.

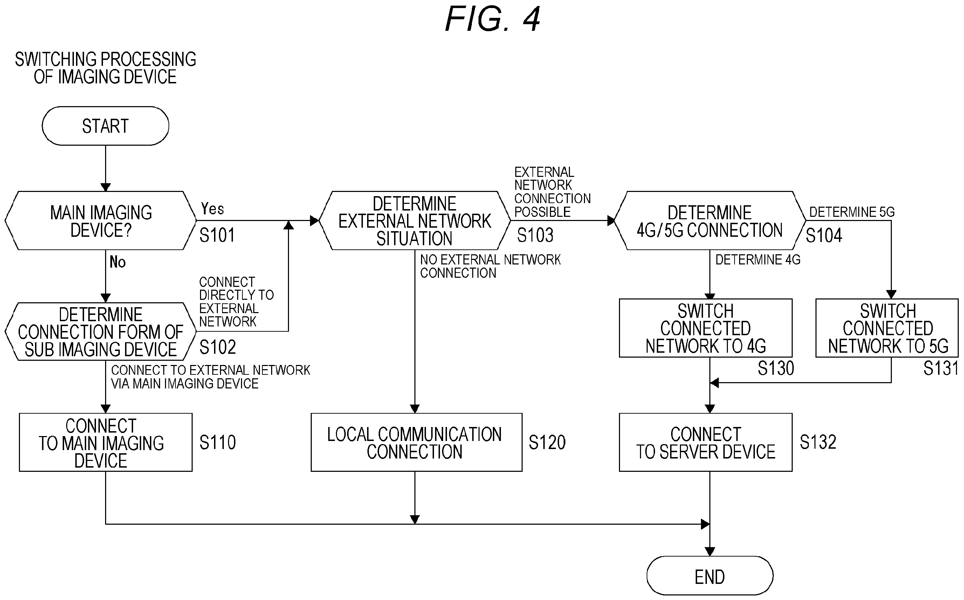

First, Fig. 4 illustrates processing when the imaging device 1 determines a connection destination.

In step S101 of Fig. 4, the camera control unit 18 branches the processing depending on whether or not the camera control unit itself is set in the main imaging device 1M.

Note that, in a case where the main imaging device 1M is set, the process proceeds to step S103. Note that, when the master device/slave device is not particularly set, the process proceeds to step S103.

In step S103, the camera control unit 18 determines a network situation. Here, it is determined whether or not to connect to the network 6, which is an external communication network, that is, the "external network".

If it is currently impossible to connect to the external network, the camera control unit 18 proceeds to step S120 and sets the connection destination as the local communication connection. For example, a switching process using the mobile terminal 9 as a connection destination is performed.

Note that the connection destination of the mobile terminal 9 is not limited to the determination of whether or not the external network can be connected in step S103, and may be determined according to other situation determination results described later.

In a case where it is determined in step S103 that connection to the external network is possible, the camera control unit 18 proceeds to step S104 and determines whether to perform 4G communication or 5G communication.

In a case where it is determined that the 4G communication is suitable, the camera control unit 18 proceeds to step S130 and performs processing of switching the connected network to the 4G communication network.

On the other hand, in a case where it is determined that the 5G communication is suitable, the camera control unit 18 proceeds to step S131 and performs processing of switching the connected network to the 5G communication network.

Then, in step S132, the camera control unit 18 performs connection setting on the server device 2.

In a case where it is determined in step S101 that the camera control unit 18 itself is set to the sub imaging device 1S, the camera control unit proceeds to step S102 and determines a connection form as the sub imaging device 1S. In this case, the camera control unit 18 determines whether to directly connect to the external network or to connect to the external network via the main imaging device 1M.

In a case where it is determined to directly connect to the external network, the camera control unit 18 proceeds to step S103 and performs the above-described determination.

In a case where it is determined that communication via the main imaging device 1M is performed, the camera control unit 18 proceeds to step S110 and sets the main imaging device 1M as a connection destination. That is, the master/slave communication is selected.

As illustrated in Fig. 4, the camera control unit 18 executes the connection destination setting processing when necessary.

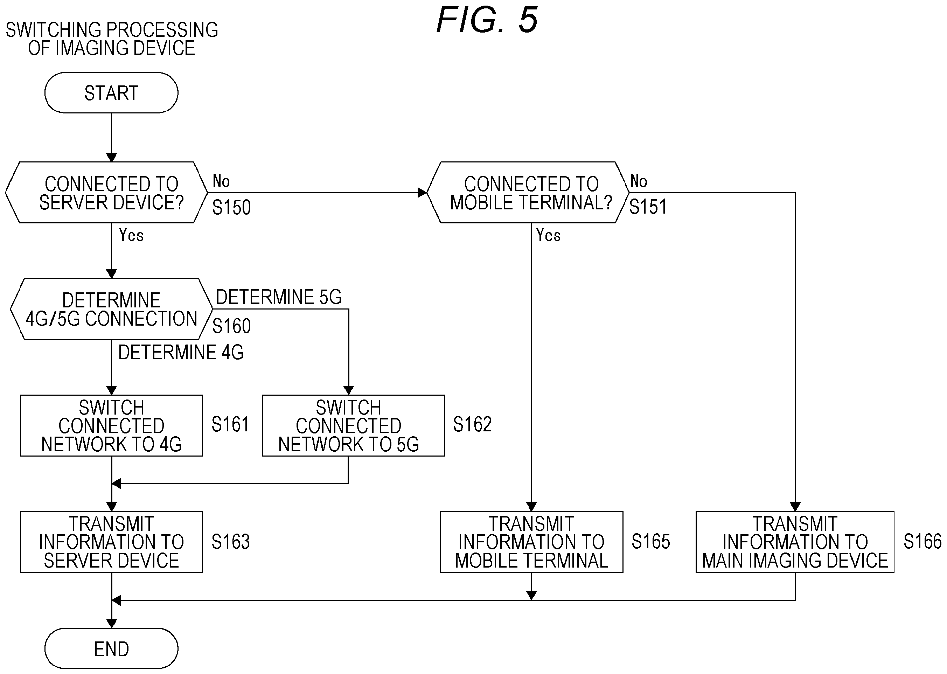

Furthermore, the camera control unit 18 performs processing of Fig. 5 when transmitting information to the outside, for example, transmitting image data and the like. Note that the information to be transmitted is not limited to data of an image (still image or moving image), and various types of information such as an audio file, metadata, and parameters are assumed.

In step S150, the camera control unit 18 determines whether or not it is connected to the server device 2.

Here, for example, the server device 2 is set as the connection destination in the processing of Fig. 4 described above, and it is determined whether or not the server device 2 is currently in the connected situation.

In a case where the server device 2 is connected, the camera control unit 18 proceeds to step S160 and determines which one of the 4G communication and the 5G communication is appropriate at present.

In a case where it is determined that the 4G communication is suitable, the camera control unit 18 proceeds to step S161 and performs processing of switching the connected network to the 4G communication network. Note that, if the connection to the 4G communication network has already been established at the time of proceeding to step S161, the connection is only required to be maintained.

On the other hand, in a case where it is determined that the 5G communication is suitable, the camera control unit 18 proceeds to step S162 and performs processing of switching the connected network to the 5G communication network. Note that, if the connection to the 5G communication network has already been established at the time of proceeding to step S162, the connection is only required to be maintained.

Then, in step S163, the camera control unit 18 transmits information to the server device 2.

When a device other than the server device 2 is connected at the time of the information transmission, the camera control unit 18 proceeds from step S150 to step S151, and branches the processing depending on whether or not the device is connected to the mobile terminal 9.

Then, if the mobile terminal 9 is connected, the camera control unit 18 proceeds to step S165 and transmits information to the mobile terminal 9.

On the other hand, if the imaging device 1 is not connected to the mobile terminal 9 in step S151, it is assumed that the imaging device 1 is the sub imaging device 1S and is connected to the main imaging device 1M in step S110 of Fig. 4. Therefore, the camera control unit 18 proceeds to step S166 and transmits information to the main imaging device 1M.

In the processing of Figs. 4 and 5 described above, the camera control unit 18 performs various types of situation determination, and performs switching processing related to communication according to the situation determination. For example, processing of switching the connection destination as in steps S110, S120, and S132 in Fig. 4 or processing of switching the communication scheme (4G communication, 5G communication) as in steps S130, S131, S161, and S162 is performed.

Specific examples of such situation determination and switching processing based on the situation determination are as follows.

First, as the situation determination and switching processing regarding the 4G/5G in steps S104, S130, and S131 or steps S160, S161, and S162, the following examples can be considered.

### · Situation as to whether or not the network is a 5G-compatible network

In a case where connection to the 5G-compatible network is possible, the camera control unit 18 performs processing of switching the communication scheme to the 5G communication scheme.

In a case where the connection can be made only to the 5G non-compatible network, the camera control unit 18 performs processing of switching the communication scheme to the 4G communication scheme.

### · Situation of transmission data amount

When it is determined that an amount of data to be transmitted is large, the camera control unit 18 performs processing of switching the communication scheme to the 5G communication scheme. As a case where it is determined that the transmission data amount is large, for example, a case of FTP transfer of a moving image, batch FTP transfer of a large number of still images, and the like is assumed.

In a case where it is determined that the amount of data to be transmitted is small, the camera control unit 18 performs processing of switching the communication scheme to the 4G communication scheme. As a case where it is determined that the amount of transmission data is small, for example, transfer of one still image, transfer of only metadata, and the like is assumed.

### · Battery situation

In a case where it is determined that the capacity of the battery 24a is small, the camera control unit 18 performs processing of switching the communication scheme to the 4G communication scheme.

In a case where it is determined that the capacity of the battery 24a is large, the camera control unit 18 performs processing of switching the communication system to the 5G communication system.

Note that this switching is based on the premise that the 5G communication consumes more power than the 4G communication.

### · Situation of communication fee

In a case where it is determined that the preset communication fee has not been reached, the camera control unit 18 performs processing of switching the communication scheme to the 5G communication scheme.

In a case where it is determined that the preset communication fee has been reached, the camera control unit 18 performs processing of switching the communication scheme to the 4G communication scheme.

Note that this switching assumes a case where the communication fee per packet is different between the 4G communication and the 5G communication, and the 5G communication is higher.

These are examples, and switching of the 4G/5G communication scheme is also conceivable. Furthermore, the switching of these communication schemes can be applied not only to the switching of the 4G/5G communication scheme but also to the switching of other communication schemes.

The following example is conceivable for connection destination switching as in steps S110, S120, and S132 in Fig. 4.

### • External network situation

When connection to the external network cannot be established, the camera control unit 18 switches the connection destination to the mobile terminal 9 by local communication, and performs processing of transmitting information (for example, image data). Note that, in this case, when the mobile terminal 9 can connect to the external network, it is conceivable that information such as image data is transmitted from the mobile terminal 9 to the server device 2.

When connection to the external network is possible, the camera control unit 18 switches the connection destination to the server device 2 and performs processing of directly transmitting information to the server device 2.

### • Communication speed (band) of external network

In a case where the network bandwidth is narrow, for example, when it is determined that a transfer rate bits per second (bps) is low, the camera control unit 18 switches the connection destination to the mobile terminal 9 by local communication and performs processing of transmitting information. When the mobile terminal 9 can be connected to the external network, the mobile terminal 9 transmits the information received from the imaging device 1 to the server device 2.

In a case where the network bandwidth is wide, for example, when it is determined that the transfer rate bps is high, the camera control unit 18 performs processing of switching the connection destination to the server device 2 and directly transmitting information to the server device 2.

### • Another example according to communication speed (band) of external network

In a case where it is determined that the network bandwidth is narrow, the camera control unit 18 sets the connection destination to the mobile terminal 9 in addition to the server device 2, and performs processing of transmitting information to the server device 2 and the mobile terminal 9. By transmitting the information to the mobile terminal 9, a backup function of information to be transmitted can also be obtained.

In a case where it is determined that the network bandwidth is wide, the camera control unit 18 performs processing of switching the connection destination to the server device 2 and directly transmitting information to the server device 2.

### • Situation of 4G or 5G environment

In the case of the 4G network environment, the camera control unit 18 switches the connection destination to the mobile terminal 9 by local communication and performs processing of transmitting information. When the mobile terminal 9 can be connected to the external network, the mobile terminal 9 transmits the information received from the imaging device 1 to the server device 2.

In the case of the 5G network environment, the camera control unit 18 performs processing of switching the connection destination to the server device 2 and directly transmitting information to the server device 2.

### • Situation of use according to user setting

For example, it is assumed that the user can select setting of immediate delivery of the captured image or setting of delivery after processing.

For example, in a case where the setting of immediate delivery is selected due to news and the like, the camera control unit 18 performs processing of switching the connection destination to the server device 2 and directly transmitting information to the server device 2. As a result, quick information transmission (delivery) is realized.

For example, in a case where the setting of delivery after processing is selected, the camera control unit 18 switches the connection destination to the mobile terminal 9 by local communication and performs processing of transmitting information. In this case, it is suitable for the mobile terminal 9 to perform image processing and the like, and when the mobile terminal 9 can be connected to an external network, information such as an image processed by the mobile terminal 9 can be sent to the server device 2.

### • Operating situation of server device

When there is no response from the server device 2 in communication with the server device 2, the camera control unit 18 switches the connection destination to the mobile terminal 9 by local communication and performs processing of transmitting information. When the mobile terminal 9 can be connected to the external network, the mobile terminal 9 transmits the information received from the imaging device 1 to the server device 2.

When a normal response is obtained from the server device 2 in communication with the server device 2, the camera control unit 18 performs processing of switching the connection destination to the server device 2 and directly transmitting information to the server device 2.

### <4. Communication processing of mobile terminal>

In the switching processing as described above, in a case where information such as an image is transmitted from the imaging device 1 to the mobile terminal 9, the mobile terminal 9 then transmits the information to the server device 2.

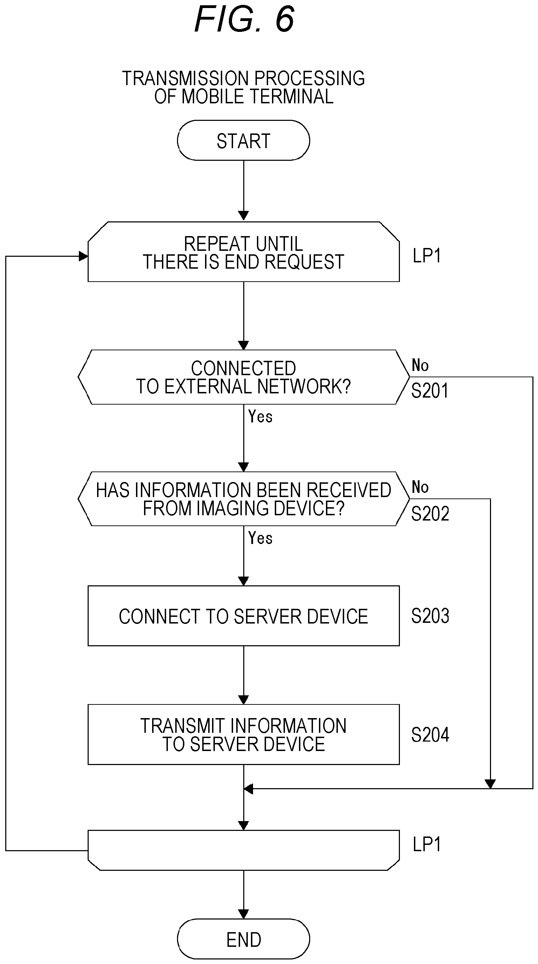

The CPU 71 of Fig. 3 in the mobile terminal 9 performs the processing of Fig. 6 as necessary.

That is, as loop processing LP1, the CPU 71 repeats the processing from step S201 to step S204 until there is an end request.

In step S201, the CPU 71 determines whether or not it is connected to an external network. When not connected, the CPU 71 ends one processing as the loop processing LP1.

When connected to the external network, the CPU 71 proceeds to step S202 and determines whether or not information has been received from the imaging device 1. That is, it is determined whether or not there is information to be transmitted to the server device 2. In a case where the information from the imaging device 1 has not been received, the CPU 71 ends one processing as the loop processing LP1.

In a case where there is information to be transmitted, that is, information transmitted from the imaging device 1 and not transmitted to the server device 2, the CPU 71 proceeds to step S203, connects to the server device 2 by external network communication, and transmits the information to the server device 2 in step S204.

As the mobile terminal 9 performs the processing of Fig. 6, even when the imaging device 1 switches the mobile terminal 9 to the connection destination according to the situation, the information to be transmitted from the imaging device 1 to the server device 2 is transmitted from the mobile terminal 9 to the server device 2.

### <5. Communication processing between main and sub imaging devices>

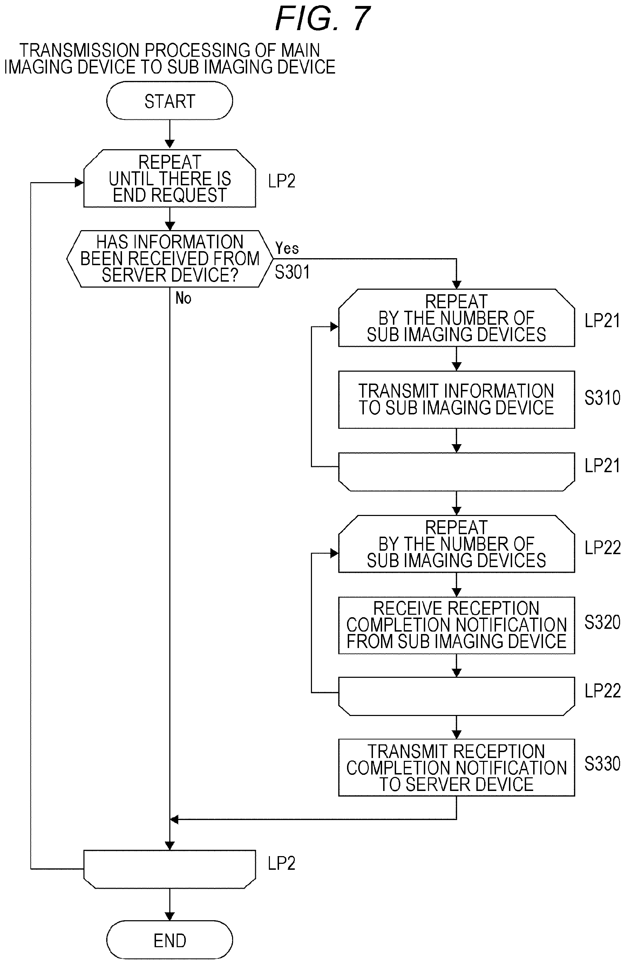

Next, a processing example in a case where the main imaging device 1M receives information from the server device 2 and distributes the information to the sub imaging device 1S, that is, a processing example in a case where master/slave communication is performed will be described with reference to Fig. 7.

As loop processing LP2 of Fig. 7, the camera control unit 18 of the main imaging device 1M repeats the processing of steps S301 to S330 until there is an end request.

In step S301, the camera control unit 18 determines whether or not information has been received from the server device 2. For example, it is assumed that information such as data and parameters shared among the plurality of imaging devices 1 can be transmitted from the server device 2 to the main imaging device 1M.

If such information is not received, the camera control unit 18 ends one processing as the loop processing LP2.

In a case where the information from the server device 2 is received, the camera control unit 18 repeats the loop processing LP 21 and loop processing LP 22 by the number of sub imaging devices 1S.

In step S310 of the loop processing LP 21, the camera control unit 18 transmits the information received from the server device 2 to the sub imaging device 1S.

In step S320 of the loop processing LP 22, the camera control unit 18 performs reception processing of a reception completion notification from the sub imaging device 1S.

When these processing is completed, the camera control unit 18 proceeds to step S330 and transmits a reception completion notification to the server device 2. That is, notification of information sharing completion by the plurality of imaging devices 1 (the main imaging device 1M and one or a plurality of sub imaging devices 1S) is provided to the server device 2.

In this manner, it is suitable in the following cases that the main imaging device 1M first receives the information from the server device 2 and then the main imaging device 1M distributes the information to the sub imaging device 1S.
(a) A situation in which the sub imaging device 1S has no external network connection function.
(b) A situation in which a plurality of imaging devices 1 is connected to a network, and network connection settings change frequently due to a change in an imaging location and the like.
(c) A situation in which the main imaging device 1M desires to manage whether information (for example, various types of setting information, various types of instruction information such as an imaging instruction, and the like.) has spread to the sub imaging device 1S. For example, a situation in which the main imaging device 1M waits for completion from the sub imaging device 1S.

Furthermore, it is also conceivable to switch between a case where the main imaging device 1M distributes information to the sub imaging device 1S and a case where each imaging device 1 directly receives information from the server device 2 according to the situation as described above. That is, in a case where it is determined that the situation is as in (a), (b), and (c), the communication is switched to use the communication between the main and sub imaging devices in Fig. 7, and in a case where it is determined that the situation is not as in (a), (b), and (c), each imaging device 1 is independently connected to the server device 2 and switched to receive information.

Moreover, for example, the following example is also conceivable.

### • Communication data amount

When an amount of communication data is small, the switching is performed so as to use the communication between the main and sub imaging devices in Fig. 7.

When the amount of communication data is large, each imaging device 1 is independently connected to the server device 2 and switched to receive information.

As a result, a processing load of the main imaging device 1M can be reduced.

### • Communication speed (band) of external network

In a case where the network bandwidth is narrow, for example, when it is determined that the transfer rate bps is low, the switching is performed so as to use the communication between the main and sub imaging devices in Fig. 7.

In a case where the network bandwidth is wide, for example, when it is determined that the transfer rate bps is high, each imaging device 1 is independently connected to the server device 2 and is switched to receive information.

As a result, a load on the external network can be reduced.

### <6. Summary and modification examples>

According to the above embodiment, the following effects can be obtained.

The imaging device 1 according to the embodiment includes the communication unit 16 that performs data communication via the external communication network, and the camera control unit 18 that performs switching processing regarding the data communication by the communication unit 16 on the basis of the situation determination processing.

As a result, a device that performs communication by a communication scheme suitable for various situations such as the external network situation, the battery situation of the imaging device 1, and the situation of the amount of transmission data can be realized, and improvement of communication efficiency of external network communication, stabilization of traffic of the entire external network, reduction of the load of each device, stabilization of the operation, and the like can be promoted.

In the embodiment, an example has been described in which the camera control unit 18 performs switching processing including switching between a first communication scheme and a second communication scheme as data communication via the external communication network on the basis of the situation determination processing (See Figs. 4 and 5). For example, the imaging device 1 is configured to be able to select communication of a plurality of communication schemes including the first and second communication schemes, and selects the communication scheme on the basis of the situation. Therefore, it is possible to perform communication using any suitable communication scheme on the basis of situation determination processing such as a place, an application, a date and time, a device situation, and a network situation.

In the embodiment, the first communication scheme is the communication scheme of the fifth generation mobile communication system, and the second communication scheme is the communication scheme of the fourth generation mobile communication system.

As a result, in a configuration in which the 4G communication and the 5G communication can be used together, appropriate selection is performed according to the network situation, the situation of the imaging device 1, the transmission content, the use, and the like.

In the embodiment, an example has been described in which the imaging device 1 transmits image data to the external server device 2 via the external communication network by the communication unit 16.

Communication suitable for image upload and the like can be realized by switching the communication scheme according to the situation when uploading an image in image capturing using the imaging device 1. In particular, the present technology is applied to sports, coverage of events, hobby imaging, and the like, and communication in a communication scheme according to a network situation, a data amount, a use, and the like at that time is realized.

The example has been given in which the communication unit 16 of the imaging device 1 of the embodiment can perform data communication with the mobile terminal 9 by local communication, and the camera control unit 18 performs switching processing on whether to perform data communication by the external communication network or to perform data communication with the mobile terminal 9 by local communication on the basis of the situation determination processing (see Fig. 5).

The imaging device 1 can perform not only communication of an external communication network via the network 6 but also local communication with respect to the mobile terminal 9, and as switching processing according to a situation, the local communication is also a switching selection target. Therefore, a situation that is not suitable for communication in the external communication network can be handled by local communication.

For example, it is suitable to transmit an image to the mobile terminal 9 for temporary storage, backup, and the like of an image to be uploaded.

The mobile terminal 9 according to the embodiment is a device capable of data communication via the external communication network (see Fig. 6).

Since the mobile terminal 9 is a device capable of executing communication of the external communication network via the network 6, image data and the like transferred from the imaging device 1 can be uploaded to the server device 2 instead of the imaging device 1.

As a result, when the imaging device 1 is not suitable for upload, it is also possible to transfer the image to the mobile terminal 9 once and upload the image from the mobile terminal 9 to the server device 2 immediately after or at a later time point. That is, an environment in which necessary data communication can be executed using local communication is formed according to a situation.

The example has been given in which the communication unit 16 of the imaging device 1 according to the embodiment is capable of master/slave communication with a compatible device by local communication, and the camera control unit 18 performs switching processing on whether to perform data communication via the external communication network or to perform master/slave communication on the basis of the situation determination processing (see Fig. 7).

The imaging device 1 enables not only communication of the external communication network via the network 6 but also communication with the master device or the slave device with respect to the own device, so that communication according to the situation can be diversified.

In the embodiment, as the situation determination processing of the camera control unit 18, an example has been described in which a communication scheme supported by the external communication network of the connection destination is determined. For example, it is determined whether the external communication network of the connection destination is compatible with the 4G communication scheme or the 5G communication scheme.

As a result, the imaging device 1 can appropriately select the communication scheme according to the current situation of the network 6 and the base station 4.

In the embodiment, an example of determining whether or not an external communication network is connectable has been described as the situation determination processing. For example, by determining whether connection to the external communication network is currently possible, appropriate communication is selected and the switching is performed.

As a result, the imaging device 1 can determine whether or not communication can be currently performed by the network 6 and perform switching related to communication. For example, the communication to the server device 2 can be switched to the communication to the mobile terminal 9.

In the embodiment, an example of determining the communication speed of the external communication network of the connection destination has been described as the situation determination processing. For example, the switching is performed on the basis of a communication speed in a current external communication network.

As a result, the imaging device 1 can perform switching related to communication according to the current communication speed by the network 6. For example, a large amount of data transmission is avoided in a situation where the communication speed is reduced, or a communication scheme capable of coping with a low communication speed is selected.

In the embodiment, an example in which the transmission data amount is determined has been described as the situation determination processing.

For example, the switching is performed on the basis of an amount of data to be transmitted.

As a result, the imaging device 1 can perform switching by appropriately selecting which communication scheme to apply, where to set the transmission destination, and the like. For example, in a case where the amount of data to be transmitted is large, it is assumed that the 5G communication is performed, or local communication is performed instead of communication of the external communication network.

In the embodiment, an example in which the determination of the battery capacity is performed has been described as the situation determination processing.

For example, a remaining battery level of the communication apparatus itself is determined, and the switching is performed on the basis of the remaining battery level.

As a result, the imaging device 1 can select a communication scheme according to the current remaining battery level. For example, in a case where the power consumption of the 5G communication is larger than that of the 4G communication, it is assumed that the 4G communication is performed when the remaining battery level is low.

In the embodiment, an example has been described in which the operating situation of the server device 2 serving as the transmission destination via the external communication network is determined as the situation determination processing. For example, the operating situation is determined by a response from the server device 2, and the switching is performed.

As a result, the imaging device 1 can select whether to perform communication of the external communication network or local communication according to the situation of the server device 2. That is, when the situation of the server device 2 as the transmission destination is not suitable for transmission, it is possible to take measures such that necessary communication is performed using the mobile terminal 9.

In the embodiment, as the situation determination processing, an example of determining the use setting by the user has been described. For example, the switching is performed according to the setting of news reporting work/hobby imaging and the like, the setting of the presence or absence of processing such as image processing as the use of the user.

As a result, the imaging device 1 can select communication according to the use of data, such as selecting communication of an external communication network in the case of a news application requiring immediate delivery and selecting local communication in the case of a setting for performing image processing.

Note that, in the embodiment, the imaging device 1 has been described as an example of the communication apparatus, and the switching processing based on the situation determination processing by the imaging device 1 has been mainly described. However, a specific example of the communication apparatus of the present disclosure is not limited to the imaging device 1, and various devices are conceivable. For example, the communication apparatus may be any device as long as it has a communication function, and specifically, various examples such as a personal computer device, a tablet type information processing device, a mobile phone device, a game device, an audio device, a video device, a dedicated communication apparatus, and a television device are assumed.

Although the MEC 5 is illustrated in Fig. 1, the MEC 5 may have some of the functions of the imaging device 1 (for example, functions of situation determination processing and switching processing).

The program of the embodiment is a program for causing a CPU, a DSP, or a device including the CPU and the DSP to execute the processing of the camera control unit 18 of the imaging device 1 described above.

That is, the program according to the embodiment is a program for causing a control unit of a communication apparatus including a communication unit that performs data communication by an external communication network to execute switching processing related to data communication by the communication unit on the basis of situation determination processing.

With such a program, the communication apparatus such as the imaging device 1 described above can be realized by various devices having a communication function.

These programs can be recorded in advance in an HDD as a recording medium built in a device such as a computer device, a ROM in a microcomputer having a CPU, and the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program can be installed from a removable recording medium to a personal computer and the like, or can be downloaded from a download site via a network such as a local area network (LAN) or the Internet.

Furthermore, such a program is suitable for providing a wide range of communication apparatuses such as the imaging device 1 of the embodiment. For example, by downloading the program to a portable terminal device such as a smartphone or a tablet, a mobile phone, a personal computer, a game device, a video device, a personal digital assistant (PDA), and the like, the smartphone and the like can be caused to function as the communication apparatus of the present disclosure.

Note that the effects described in the present specification are merely examples and are not limited, and other effects may be provided.

Note that the present technology can also adopt the following configurations.
(1) A communication apparatus including:
   a communication unit that performs data communication via an external communication network; and
   a control unit that performs switching processing related to data communication by the communication unit on the basis of situation determination processing.
(2) The communication apparatus according to (1) described above, in which
   the control unit performs switching processing including switching between a first communication scheme and a second communication scheme as data communication via the external communication network on the basis of the situation determination processing.
(3) The communication apparatus according to (2) described above, in which
   the first communication scheme includes a communication scheme of a fifth generation mobile communication system, and
   the second communication scheme includes a communication scheme of a fourth generation mobile communication system.
(4) The communication apparatus according to any one of (1) to (3) described above, in which
   the communication apparatus is configured as an imaging device, and
   the communication unit performs transmission of image data to an external information processing device via the external communication network.
(5) The communication apparatus according to any one of (1) to (4) described above, in which
   the communication unit can perform data communication with another terminal device by local communication, and
   the control unit performs switching processing of performing data communication via the external communication network or performing data communication with the another terminal device via local communication on the basis of the situation determination processing.
(6) The communication apparatus according to (5) described above, in which
   the another terminal device is a device capable of data communication via the external communication network.
(7) The communication apparatus according to any one of (1) to (6) described above, in which
   the communication unit is capable of master/slave communication with a compatible device by local communication, and the control unit performs switching processing of performing data communication via the external communication network or performing the master/slave communication on the basis of the situation determination processing.
(8) The communication apparatus according to any one of (1) to (7) described above, in which
   the control unit determines a communication scheme supported by an external communication network of a connection destination as the situation determination processing.
(9) The communication apparatus according to any one of (1) to (8) described above, in which
   the control unit
   determines whether or not the external communication network is connectable as the situation determination processing.
(10) The communication apparatus according to any one of (1) to (9) described above, in which
   the control unit
   determines a communication speed of an external communication network of a connection destination as the situation determination processing.
(11) The communication apparatus according to any one of (1) to (10) described above, in which
   the control unit
   determines a transmission data amount as the situation determination processing.
(12) The communication apparatus according to any one of (1) to (11) described above, in which
   the control unit
   determines a battery capacity as the situation determination processing.
(13) The communication apparatus according to any one of (1) to (12) described above, in which.
   the control unit determines an operating situation of an external information processing device serving as a transmission destination via an external communication network as the situation determination processing.
(14) The communication apparatus according to any one of (1) to (13) described above, in which
   the control unit
   determines a use setting by a user as the situation determination processing.
(15) A communication method of a communication apparatus including a communication unit that performs data communication by an external communication network, the communication method including
   performing switching processing related to data communication by the communication unit on the basis of situation determination processing.
(16) A program that causes a control unit of a communication apparatus including a communication unit that performs data communication by an external communication network to execute
   switching processing related to data communication by the communication unit on the basis of situation determination processing.

### REFERENCE SIGNS LIST

- 1: Imaging device
- 1M: Main imaging device
- 1S: Sub imaging device
- 2: Server device
- 4: Base station
- 5: MEC
- 6: Network
- 9: Mobile terminal
- 16: Communication unit
- 18: Camera control unit
- 70: Information processing device
- 71: CPU

## Claims

1. A communication apparatus comprising:
a communication unit that performs data communication via an external communication network; and
a control unit that performs switching processing related to data communication by the communication unit on a basis of situation determination processing.

2. The communication apparatus according to claim 1, wherein
the control unit performs switching processing including switching between a first communication scheme and a second communication scheme as data communication via the external communication network on a basis of the situation determination processing.

3. The communication apparatus according to claim 2, wherein
the first communication scheme includes a communication scheme of a fifth generation mobile communication system, and
the second communication scheme includes a communication scheme of a fourth generation mobile communication system.

4. The communication apparatus according to claim 1, wherein
the communication apparatus is configured as an imaging device, and
the communication unit performs transmission of image data to an external information processing device via the external communication network.

5. The communication apparatus according to claim 1, wherein
the communication unit can perform data communication with another terminal device by local communication, and
the control unit performs switching processing of performing data communication via the external communication network or performing data communication with the another terminal device via local communication on a basis of the situation determination processing.

6. The communication apparatus according to claim 5, wherein
the another terminal device is a device capable of data communication via the external communication network.

7. The communication apparatus according to claim 1, wherein
the communication unit is capable of master/slave communication with a compatible device by local communication, and
the control unit performs switching processing of performing data communication via the external communication network or performing the master/slave communication on a basis of the situation determination processing.

8. The communication apparatus according to claim 1, wherein
the control unit
determines a communication scheme supported by an external communication network of a connection destination as the situation determination processing.

9. The communication apparatus according to claim 1, wherein
the control unit
determines whether or not the external communication network is connectable as the situation determination processing.

10. The communication apparatus according to claim 1, wherein
the control unit
determines a communication speed of an external communication network of a connection destination as the situation determination processing.

11. The communication apparatus according to claim 1, wherein
the control unit
determines a transmission data amount as the situation determination processing.

12. The communication apparatus according to claim 1, wherein
the control unit
determines a battery capacity as the situation determination processing.

13. The communication apparatus according to claim 1, wherein
the control unit
determines an operating situation of an external information processing device serving as a transmission destination via an external communication network as the situation determination processing.

14. The communication apparatus according to claim 1, wherein
the control unit
determines a use setting by a user as the situation determination processing.

15. A communication method of a communication apparatus including a communication unit that performs data communication by an external communication network, the communication method comprising
performing switching processing related to data communication by the communication unit on a basis of situation determination processing.

16. A program that causes a control unit of a communication apparatus including a communication unit that performs data communication by an external communication network to execute
switching processing related to data communication by the communication unit on a basis of situation determination processing.
